# EUROPÄISCHE PATENTSCHRIFT

(11) **EP 4 127 059 B1**
(45) Veröffentlichungstag und Bekanntmachung des Hinweises auf die Patenterteilung: **17.12.2025**
(21) Anmeldenummer: 21713033.5
(22) Anmeldetag: 23.03.2021
(51) Int. Cl.: C08L 51/04, C08L 25/12, C08K 5/3435, C08K 5/3475, C08K 3/04, B60R 1/06, B60R 19/52

(54) **ASA-POLYMERZUSAMMENSETZUNG MIT OPTIMIERTER UV-STABILITÄT SOWIE GUTEM ZÄHIGKEITS-STEIFIGKEITS-VERHÄLTNIS**
ASA POLYMER COMPOSITION WITH OPTIMISED UV STABILITY AND GOOD TOUGHNESS-STIFFNESS BALANCE
COMPOSITION DE POLYMÈRES ASA PRÉSENTANT UNE STABILITÉ OPTIMISÉE AUX UV ET UN BON ÉQUILIBRE TÉNACITÉ-RIGIDITÉ

(30) Priorität: 24.03.2020 EP 20165145
(43) Veröffentlichungstag der Anmeldung: 08.02.2023
(73) Patentinhaber: INEOS Styrolution Group GmbH, 60325 Frankfurt (DE)
(72) Erfinder: NIESSNER, Norbert, 67159 Friedelsheim (DE); AHN, SangJun, Seoul 05658 (KR)
(74) Vertreter: Jacobi, Markus Alexander
(86) Internationale Anmeldenummer: PCT/EP2021/057397
(87) Internationale Veröffentlichungsnummer: WO 2021/191192

(56) Entgegenhaltungen:
- WO-A1-2012/007268
- WO-A1-2019/007957
- WO-A1-2021/074151
- WO-A1-2021/074152
- WO-A1-2021/074154
- WO-A1-2021/074155
- US-A1- 2012 007 283

## Beschreibung

### Geänderte Beschreibung

Die Erfindung betrifft stabilisierte thermoplastische Zusammensetzungen auf Basis von Acrylat-Styrol-Acrylnitril (ASA) Copolymeren mit verbesserten Oberflächeneigenschaften, u.a. einer verbesserten Beständigkeit der Oberflächenqualität von Formteilen bei einer Lagerung in feucht-warmer Umgebung. Ferner betrifft die Erfindung die Verwendung der Zusammensetzungen, deren Herstellung sowie Formteile (z.B. Formkörper) hergestellt aus den thermoplastischen ASA-Zusammensetzungen.

Es ist bekannt, Styrol-Acrylnitril-Copolymere (SAN) und/oder Alpha-Methylstyrol-Acrylnitril-Copolymere (AMSAN) durch Einarbeiten von Pfropfkautschuken, beispielsweise vernetzten Polyacrylat-Kautschuken, im Hinblick auf eine bessere Schlagzähigkeit zu modifizieren.

Solche Acrylat-Styrol-Acrylnitril (ASA) Copolymere werden seit vielen Jahren in großen Mengen als thermoplastische Formmassen für die Herstellung von Formteilen aller Art eingesetzt. Grundsätzlich kann die Herstellung von solchen schlagzäh-modifizierten SAN-Formmassen durch Pfropfpolymerisation von Styrol und Acrylnitril in Gegenwart eines Pfropfkautschuks und/oder durch nachträgliches Abmischen eines Pfropfkautschuks (Pfropflatex) mit einer separat hergestellten polymeren Styrol-Acrylnitril-Matrix erfolgen. Dabei kann das Eigenschaftsspektrum der Formmassen und der daraus hergestellten Formteile in weiten Bereichen variiert werden. Beispiele für kommerziell erhältliche ASA-Copolymere sind Produkte der Serie Luran^{®} S (von Ineos Styrolution, Frankfurt). Auch Blends aus ASA und Polycarbonat (ASA/PC) sind beispielsweise unter dem Namen Luran^{®} SC (Ineos Styrolution) erhältlich. Blends aus ASA und Polyamid (ASA/PA) sind beispielsweise unter dem Namen Terblend^{®} S (Ineos Styrolution) erhältlich.

Die mittlere Teilchengröße des Pfropfkautschuks in den ASA-Zusammensetzungen kann gezielt eingestellt werden, da die Größe der Kautschukpartikel einen wesentlichen Einfluss auf die physikalischen Eigenschaften der späteren thermoplastischen Formteile hat. Dies wird beispielsweise in WO 2015/078751 beschrieben. Neben den vorteilhaften mechanischen Eigenschaften von ASA-Copolymer Produkten, wie hohe Zähigkeit (Schlagzähigkeit, Kerbschlagzähigkeit), hohe Elastizität (E-Modul), gute Verarbeitbarkeit (thermoplastische Fließfähigkeit, insbesondere ein geeigneter Schmelzflussindex, MVR) und hohe Wärmeformbeständigkeit, sind insbesondere die Oberflächeneigenschaften, wie Glanz, Glätte, Homogenität und gleichmäßiges Aussehen, von besonderer Bedeutung.

ASA-Formmassen, bzw. die daraus hergestellten Formteile, sollen insbesondere eine hohe Oberflächenhomogenität, d.h. eine Oberfläche ohne Störungen, wie Vertiefungen, Risse oder Salzeinlagerungen, ermöglichen.

Wesentlich für Einsatzgebiete z.B. im Automobil-Bereich ist der Erhalt einer guten Oberflächenhomogenität unter feucht-warmen Umgebungsbedingungen. Eine feucht-warme Umgebung bezeichnen im Allgemeinen Bedingungen, die eine Temperatur und eine Luftfeuchte umfassen, welche über den üblichen Werten von 15 bis 25 °C und 30 bis 60 % relativer Luftfeuchte liegen. Zudem können feucht-warme Umgebungsbedingungen insbesondere den direkten Kontakt der betreffenden Oberfläche mit z.B. Kondenswasser umfassen.

Ein Gegenstand der Erfindung ist demnach eine thermoplastische Acrylat-Styrol-Acrylnitril (ASA) Copolymer-Zusammensetzung, die für die Herstellung von Formteilen besonders geeignet ist.

Die Zusammensetzung enthält folgende Komponenten (bzw. besteht aus folgenden Komponenten):
10-89,7 Gew.-%, bezogen auf die gesamte Zusammensetzung, eines Copolymers A1,
10-89,7 Gew%, bezogen auf die gesamte Zusammensetzung, mindestens eines Pfropfcopolymers A2 mit einer mittleren Teilchengröße von 80 bis 800 nm,
0,1-2 Gew.-%, bezogen auf die gesamte Zusammensetzung, mindestens eines sterisch gehinderten Amins (HALS) B1,
0-2 Gew.-%, bezogen auf die gesamte Zusammensetzung, mindestens eines sterisch gehinderten Amins (HALS) B2, verschieden von B1,
0,1-2 Gew.-%, bezogen auf die gesamte Zusammensetzung, insbesondere 0,1-2 Gew.-%, mindestens eines UV-A Absorbers B3,
0,1-3 Gew.-%, bezogen auf die gesamte Zusammensetzung, mindestens einer Carbon-Black-Komponente CB, sowie
0-5 Gew.-%, bezogen auf die gesamte Zusammensetzung, insbesondere 0,1-5 Gew.-%, eines weiteren/ weiterer Additiv(e) C, verschieden von B1, B2, B3 und CB,
wobei die thermoplastische Acrylat-Styrol-Acrylnitril Copolymer-Zusammensetzung nach der Herstellung von Formteilen, insbesondere durch Spritzgießen, dazu führt, dass

in einem Formteil nach 500 h künstlicher Bewitterung gemäß Norm EN ISO 4892 mindestens eines der sterisch gehinderten Amine (B1, B2) an der Oberfläche des Formteils in einer höheren Menge vorliegt, als in einem Formteil vor der künstlichen Bewitterung.

Die thermoplastische ASA-Zusammensetzung führt nach der Herstellung von Formteilen, wie kreisförmigen Platten (z.B. mit 60 mm Durchmesser) durch z.B. Spritzgießen, insbesondere dazu, dass das Formteil an seiner Oberfläche bereits nach 500 h künstlicher Bewitterung gemäß Norm EN ISO 4892 (2016) nachweislich eine größere Menge eines sterisch gehinderten Amin-Stabilisator (B1) aufweist als ein Formteil vor der künstlichen Bewitterung, also nach 0 h Bewitterung.

ASA-Copolymere und deren Mischungen mit anderen thermoplastischen Polymeren, wie Polycarbonat oder Polyamid, sind in vielen Anwendungen, wie z.B. in der Automobilindustrie, der Elektronikindustrie oder für Haushaltswaren, weit verbreitet. Die Beliebtheit dieser thermoplastischen Polymerzusammensetzungen kann auf ihre ausgewogenen Eigenschaften wie gute Schlagfestigkeit, ihre Schmelzflusseigenschaften und hohe Witterungsbeständigkeit zurückgeführt werden. Dem Verhältnis von Zähigkeit zu Steifigkeit und der Witterungsbeständigkeit kommt bei Polymer-Formteilen wachsende Bedeutung zu. Es ist bekannt, dass schlagzähe, mehrphasige Emulsionspolymere vom ASA-Typ besonders UV-stabil sind. Ein bedeutendes Anwendungsgebiet für ASA-Polymere sind unlackierte Automobilteile in Außenanwendungen wie Frontgitter oder Seitenspiegel, die oft schwarz eingefärbt sind.

Bei solchen Teilen benötigen Automobilhersteller neben der primären Material-Beschaffenheit, wie guten Schlag- und Wärmeeigenschaften, auch eine gute Stabilität der Oberflächenbeschaffenheit bei UV- und Witterungseinflüssen über einen längeren Zeitraum (in praxi viele tausend Stunden). Häufig werden von den Automobilherstellern genormte Bewitterungstests im Labor verwendet, um die Außen-Bewitterung über einen Zeitraum von Jahren zu simulieren. Danach wird das Aussehen der Oberfläche oft durch Veränderungen der Oberflächenfarbe und/oder des Glanzgrades beurteilt.

Stabilisatoren in ASA-Polymeren für den Einsatz in Außenanwendungen sind Kombinationen aus einem UV-Absorber (z.B. Tinuvin^{®} P, Benztriazol-Derivat) und einem niedermolekularen sterisch gehinderten Amin (HALS; Hindered Amin Light Stabilizer). Auch hochmolekulare HALS-Produkte, wie z.B. das Handelsprodukt Chimassorb^{®}944 mit durchschnittlichen Molekulargewichten oberhalb 1000 g/mol sind beschrieben, siehe EP-B 2593510. US 4,692,486, US 9,701,813, EP-B 2593510 und DE-A 10316198 beschreiben HALS-Stabilisatoren für Polymere und Kombinationen davon als UV-Absorber und Lichtstabilisatoren in Formmassen.

WO 2019/007957 offenbart thermoplastische Harzzusammensetzungen, umfassend mindestens eine Styrol-Acrylnitril-Copolymerkomponente A1, mindestens ein Acrylnitril-Styrol-Acrylat-Pfropfcopolymerisat A2 als Schlagzähmodifikator, mindestens ein Pigment B, und mindestens einen gehinderten Amin-UV-Lichtstabilisator C, wobei die enthaltenen UV-stabilisierenden Komponenten nur gehinderter Amin-UV-Lichtstabilisatoren C sind. Dem Dokument kann nicht entnommen werden, dass ein sterisch gehindertes Amin aus der Gruppe der sterisch gehinderten Mono-Piperidin-Derivate eine deutliche Verbesserung der Witterungsbeständigkeit von ASA-Zusammensetzungen mit sich bringt.

Im Rahmen der vorliegenden Erfindung wurde festgestellt, dass viele bekannte ASA-Zusammensetzungen, die bereits beschriebene UV-Stabilisator-Formulierungen enthalten, die erforderliche hohe Witterungsbeständigkeit für Anwendungen im Innen- und Außenbereich nicht erfüllen können.

Es wurde gefunden, dass für hoch anspruchsvolle Langzeit-Anwendungen der Polymer-Formkörper die Stabilisator-Kombinationen (z.B. Tinuvin^{®}P mit Tinuvin^{®}770, oder Tinuvin P^{®} mit Tinuvin^{®} 765, oder Tinuvin^{®} P mit Chimassorb^{®} 944) nicht ausreichen.

Auch die Zugabe von Stabilisatoren unterschiedlich hohen Molekulargewichts, mit dem Ziel, dass hochmolekulare Stabilisatoren langsamer migrieren und somit verzögerter wirken als niedermolekulare Stabilisatoren, ist z.T. nicht zielführend, da die Migration in polaren Komponenten, wie Styrol-Acrylnitril-Copolymeren, nur zum Teil mit dem Molekulargewicht korreliert. Von Bedeutung scheint hier die Polarität des Additivs und damit auch dessen Wechselwirkung mit der zu modifizierenden Polymerzusammensetzung.

Es wurde durch aufwändige Untersuchungen gefunden, dass diejenigen thermoplastischen Polymerzusammensetzungen eine besonders hohe UV-Stabilität aufweisen, welche zu jedem Zeitpunkt der künstlichen Bewitterung eines daraus hergestellten Formteils (z.B. Rund-Plättchen mit 60 mm Durchmesser, Dicke 3 mm) eine Mindestmenge an sterisch gehindertem Amin (HALS) auf der Oberfläche aufweisen.

Dabei gilt als Nachweisbarkeitskriterium, dass nach x Stunden künstlicher Bewitterung (mindestens 500 Stunden, bevorzugt nach mindestens 1000 h, besonders bevorzugt nach mindestens 1600 h, oftmals nach mindestens 3000 h und insbesondere nach mindestens 6000 h) die Signalintensität des an der Oberfläche nachgewiesenen UV-Stabilisators mindestens 10 % der Signalintensität der "0-Probe" (Formteil aus UV-stabilisierter Formmasse vor der Bewitterung, 0 h) übersteigt.

Die Materialbeständigkeit einer Folie oder eines Formteils bei Lagerung im Freien betrifft neben der Einwirkung des UV-Anteils des Sonnenlichtes auch u.a. die Einwirkung von Nässe, Temperaturschwankungen, Schadstoffen und Wind. Da nicht all diese Einflussgrößen in einfachen Laborversuchen simuliert werden können, wurden Untersuchungen gemäß der Norm DIN EN ISO 4892-2013/2014 durchgeführt. Die zeitraffende Alterung eines Formteils oder einer Folie durch UV-Licht wird unter Verwendung gefilterter Xenonbogenstrahlung simuliert. Bei einer Geräte-Bewitterung gegenüber der Gerätebestrahlung wird das Formteil zusätzlich in festgelegten Zyklen mit Wasser besprüht. Die Norm DIN EN ISO 4892 bezieht sich auf Kunststoffe und künstliches Bestrahlen oder Bewittern in Geräten mit Xenonbogenlampen. Die zur Auslegung von Gerätebewitterungen ermittelte Globalstrahlungsdosis bezieht sich in der Regel auf einen Spektralbereich von ca. 300-3000 nm. Verwendbar ist z.B. ein Gerät Q-SUN (der Fa. Q-LAB), welches mit Xenonbogenstrahlern arbeitet. Die Bestrahlungsstärke E [W/m²] im Gerät wird gemäß DIN EN ISO 4892-22 mit einem UV-Sensor im Wellenlängenintervall 300-400 nm geregelt. Aus E [W/m²] und der Bestrahlungszeit in Stunden [h] ergibt sich die Bestrahlungsdosis [kWh/m²] für den genannten Spektralbereich.

Eine bewährte Methode bei Einsatz von Xenonbogenstrahlung ist die Beurteilung der Alterung der Polymerproben nach Bestrahlung anhand physikalisch technologischer Kennwerte, die vergleichend an unbestrahlten (0 h) und bestrahlten (x h) Proben durchgeführt werden, z.B. in Form von mechanischen Testungen oder chemischen Analysen (z.B. Gehalt bestimmter Komponenten).

Die vorliegende Erfindung betrifft eine thermoplastische Acrylat-Styrol-Acrylnitril (ASA) Copolymer-Zusammensetzung, die für die Herstellung von Formteilen besonders geeignet ist, enthaltend folgende Komponenten (bzw. bestehend aus folgenden Komponenten):
10-89,7 Gew.-%, bezogen auf die gesamte Zusammensetzung, eines Copolymers A1, bestehend aus:
   A11: 60-70 Gew.-% mindestens eines ggf. substituierten Styrols,
   A12: 25-35 Gew.-% Acrylnitril,
   A13: 0-20 Gew.-% eines weiteren, copolymerisierbaren Monomeren;
10-89,7 Gew%, bezogen auf die gesamte Zusammensetzung, mindestens eines Pfropfcopolymers A2 mit einer mittleren Teilchengröße von 80-800 nm, bestehend aus:
   A21: 40-90 Gew.-%, bezogen auf A2, mindestens einer kautschukartigen Grundstufe mit T_{g} < 0°C bestehend aus:
      A211: 70-99,9 Gew.-%, bezogen auf A21, mindestens eines Alkylacrylats,
      A212: 0,1-10 Gew.-%, bezogen auf A21, mindestens eines, mindestens zwei funktionelle Gruppen enthaltenden vernetzenden Monomers,
      A213: 0-29,9 Gew.-%, bezogen auf A21, mindestens eines weiteren copolymerisierbaren Monomers,
   A22: 10-60 Gew.-%, bezogen auf A2, mindestens einer Pfropfhülle, bestehend aus:
      A221: 60-80 Gew.-%, bezogen auf A22, mindestens eines ggf. substituierten Styrols,
      A222: 20-40 Gew.-%, bezogen auf A22, Acrylnitril,
      A223: 0-20 Gew.-%, bezogen auf A22, mindestens eines weiteren, copolymerisierbaren Monomers;
0,1-2 Gew.-%, bezogen auf die gesamte Zusammensetzung, mindestens eines sterisch gehinderten Amins (HALS) B1, wobei das sterisch gehinderte Amin (HALS) B1 aus der Gruppe der sterisch gehinderten Mono-Piperidin-Derivate mit einer Molmasse von 400-600 g/mol ausgewählt ist;
0-2 Gew.-%, bezogen auf die gesamte Zusammensetzung, mindestens eines sterisch gehinderten Amins (HALS) B2, verschieden von B1;
0,1-2 Gew.-%, bezogen auf die gesamte Zusammensetzung, mindestens eines UV-A Absorbers B3;
0,1-3 Gew.-%, bezogen auf die gesamte Zusammensetzung, mindestens einer Carbon-Black-Komponente CB; sowie
0-5 Gew.-%, bezogen auf die gesamte Zusammensetzung, insbesondere 0,1-5 Gew.-%, eines weiteren/ weiterer Additiv(e) C, verschieden von B1, B2, B3 und CB,
wobei die thermoplastische Acrylat-Styrol-Acrylnitril Copolymer-Zusammensetzung nach der Herstellung von Formteilen, insbesondere durch Spritzgießen, dazu führt, dass in einem Formteil nach 500 h künstlicher Bewitterung gemäß Norm EN ISO 4892 (2016) mindestens eines der sterisch gehinderten Amine (B1, B2) an der Oberfläche des Formteils in einer höheren Menge vorliegt, als in einem Formteil vor der künstlichen Bewitterung.

Die Summe aller Komponenten A, B, C und CB der Zusammensetzung soll dabei vorzugsweise 100 Gew.-% betragen.

In der thermoplastischen Acrylat-Styrol-Acrylnitril Copolymer-Zusammensetzung ist vorzugsweise die Menge (ppm) an sterisch gehindertem Amin (B1, B2) an der Oberfläche des Formteils nach 1000 h, bevorzugt nach 1600 h, weiter bevorzugt nach 3000 h, mindestens doppelt so hoch, insbesondere mindestens dreifach höher ist als bei einem Formteil vor der Bewitterung.

Die thermoplastische ASA Copolymer-Zusammensetzung enthält 0,1-2 Gew.-%, oftmals 0,2 bis 1,0 Gew.-%, mindestens eines sterisch gehinderten Amins (B1), ausgewählt aus der Gruppe der sterisch gehinderten Mono-Piperidin-Derivate mit einer Molmasse von 400-600 g/mol. Insbesondere das Produkt Cyasorb^{®} UV-3853 ist geeignet, enthaltend 2,2,6,6-Tetramethyl-4-piperidinyl-Stearat. Neben dem 2,2,6,6-Tetramethyl-4-piperidinyl-Stearat ist auch das entsprechende 2,2,6,6-Tetramethyl-4-piperidinyl-Palmitat und 2,2,6,6-Tetramethyl-4-piperidinyl-Eicosanat als Einzelverbindung oder als Mischung geeignet.

In einer Ausführungsform enthält die thermoplastische ASA Copolymer-Zusammensetzung 0,1-2 Gew.-% an mindestens zwei sterisch gehinderten Aminen (B1 und B2), wobei B1 ausgewählt ist aus der Gruppe der sterisch gehinderten Mono-Piperidin-Derivate mit einer Molmasse von 400-600 g/mol, insbesondere Cyasorb^{®} UV-3853, und wobei B2 ausgewählt ist aus der Gruppe der sterisch gehinderten Piperidin-Derivate mit einer Molmasse von >600 g/mol, insbesondere von >2.000 g/mol. Vorzugsweise kommt Poly-{6-[(1,1,3,3-tetramethylbutyl)amino-1,3,5-triazine-2,4-diyl][(2,2,6,6-tetramethyl-4-piperidyl)imino]-1,6-hexanediyl[(2,2,6,6-tetramethyl-4-piperidyl)imino)}, insbesondere Chimassorb^{®} 944 als B2 zum Einsatz. Auch Chimassorb^{®}119 oder Chimassorb^{®} 2020 können verwendet werden.

In einer Ausführungsform enthält die thermoplastische ASA Copolymer-Zusammensetzung 0,1-1 Gew.-%, oftmals 0,2-0,8 Gew.-%, mindestens eines UV-A Absorbers B3, vorzugsweise ausgewählt aus der Gruppe der Benzotriazol-Derivate mit einer Molmasse von 200-400 g/mol. Insbesondere geeignet ist Tinuvin^{®} P.

In einer Ausführungsform enthält die thermoplastische ASA Copolymer-Zusammensetzung 0,1-2 Gew.-%, oftmals 0,2-0,8 Gew.-%, mindestens eines primären Antioxidans aus der Klasse der sterisch gehinderten Phenole.

In einer Ausführungsform enthält die thermoplastische ASA Copolymer-Zusammensetzung als zusätzliche Additiv-Komponente (C) 0,1-2 Gew.-%, oftmals 0,2-0,8 Gew.-%, mindestens eines sekundären Antioxidans aus der Klasse der Phosphit-Stabilisatoren. Insbesondere geeignet sind Tris-nonyl Phenylphosphit und/oder Irgafos^{®}168, und/oder mindestens eines Schwefel-Stabilisators, insbesondere Irganox^{®}PS 800.

In einer Ausführungsform enthält die thermoplastische Acrylat-Styrol-Acrylnitril Copolymer-Zusammensetzung 0,2-1,5 Gew.-%, insbesondere 0,2-1 Gew.%, einer Carbon-Black-Komponente CB.

In einer Ausführungsform enthält die thermoplastische ASA Copolymer-Zusammensetzung (in etwa) 30-70 Gew.-%, oftmals 30-40 Gew.-%, des Copolymers A1 und 20-70 Gew.-%, oftmals 60-70 Gew.%, an mindestens einem, insbesondere zwei unterschiedlichen, Pfropfcopolymer(en) A2. Die Summe aller Komponenten der Zusammensetzung soll dabei 100 Gew.-% betragen.

In einer Ausführungsform enthalten in der thermoplastischen ASA Copolymer-Zusammensetzung die Copolymer-Komponenten A1 und A2 die Monomere A11 und A221, gewählt aus der Gruppe Styrol, α-Methylstyrol und kernalkyliertes Styrol.

In einer Ausführungsform enthält in der thermoplastischen ASA Copolymer-Zusammensetzung die Pfropfcopolymer-Komponente A2 die Monomere A211 ausgewählt aus der Gruppe der Acrylsäurealkylester mit 1-8, insbesondere 1-4 Kohlenstoffatomen im Alkylrest.

In einer Ausführungsform enthalten in der thermoplastischen ASA Copolymer-Zusammensetzung die Copolymer-Komponenten A1 und A2, wobei die Monomere A12 und A222 Acrylnitril sind und A11 und A221Styrol sind.

Gegenstand der Erfindung ist auch ein Verfahren zur Herstellung einer thermoplastischen Acrylat-Styrol-Acrylnitril Copolymer-Zusammensetzung für die Herstellung von Formteilen, wie oben beschrieben, wobei die Copolymer-Komponenten A1 und A2 durch Emulsionspolymerisation bzw. eine Pfropfmischpolymerisation hergestellt werden und anschließend mit den weiteren Komponenten B1, B2, CB und C (und ggf. weiteren Komponenten) vermengt werden.

Gegenstand der Erfindung ist auch ein Formteil hergestellt aus einer thermoplastischen Acrylat-Styrol-Acrylnitril Copolymer-Zusammensetzung wie oben beschrieben.

Gegenstand der Erfindung ist auch ein die Verwendung einer thermoplastischen Acrylat-Styrol-Acrylnitril Copolymer-Zusammensetzung wie oben beschrieben für die Herstellung von Formteilen, insbesondere für Automobil-Teile wie Außenspiegel, Karosserieverkleidungen, Kühlergitter, Front- und/oder Back-end Teile, Teile von Leuchten und Leuchten-Gehäusen, Kabelummantelungen, Folien, Schläuchen, Fasern, Profilen, technischen Formteilen, Beschichtungen und/oder Blasformkörpern.

Die Komponenten der Zusammensetzung werden nachfolgend erläutert.

### Komponente A1

Komponente A1 wird in Mengen von 10-89,7, insbesondere (etwa) 30-70 Gew.-% eingesetzt. Als Monomere A11 eignen sich vinylaromatische Monomere, bevorzugt Styrol und/oder Styrolderivate, wie bevorzugt α-Methylstyrol und kernalkylierte Styrole, wie z.B. p-Methylstyrol und/oder tert-Butylstyrol.

Als Monomere A12 wird zumeist Acrylnitril eingesetzt, es können jedoch auch beispielsweise folgende Verbindungen Verwendung finden: Methacrylnitril, Methylacrylat, Ethylacrylat, Propylacrylat, Methylmethacrylat, Ethylmethacrylat, Phenylmaleinimid, Acrylamid, Vinylmethylether. Bevorzugt wird jedoch Acrylnitril eingesetzt.

Die Herstellung von A1 kann nach allgemein bekannten Methoden erfolgen, siehe z.B. DE-A 3149358 (S. 9, Z. 18-32) und DE-A 3227555 (S. 9, Z. 18-32). Z.B. erfolgt Copolymerisation von A11, A12 und gegebenenfalls weiteren, copolymerisierbaren Monomeren A13 in Masse, Lösung, Suspension oder wässriger Emulsion bei üblichen Temperaturen und Drücken in bekannten Apparaturen (s. Kunstsoff-Handbuch, Vieweg-Daumiller, Band V (Polystyrol), Carl-Hanser, München 1969, S. 124).

### Komponente A2

Die Pfropfcopolymer Komponente A2 wird in Mengen von 10 bis 89,7, insbesondere (etwa) 20-70 Gew.-% eingesetzt.

Als Monomere A211 für die Herstellung der Acrylsäureester-Grundstufe A21 kommen vorzugsweise Acrylsäurealkylester mit 1-8 Kohlenstoffatomen, bevorzugt 4-8 Kohlenstoffatomen im Alkylrest, insbesondere Acrylsäure-n-butylester und/oder Acrylsäureethylhexylester in Betracht. Die Acrylsäureester können bei der Herstellung der Pfropfgrundlage A21 einzeln oder in Mischung eingesetzt werden.

Als Vernetzer A212 eignen sich insbesondere Allyl(meth)acrylat, Divinylbenzol, Diallylmaleat, Diallylfumarat und/oder Diallylphthalat und Tri-Allylcyanurat, insbesondere Allylmethacrylat (AMA) und der Acrylsäureester des Tricyclodecenylalkohols und/oder Dicyclopentadienylacrylat.

Als mögliche weitere copolymerisierbare Monomere A213 können beispielsweise Verwendung finden: α-Methylstyrol, Methacrylnitril, Methylmethacrylat, Ethylmethacrylat, Phenylmaleinimid, Acrylamid, Vinylmethylether; ggf. auch Methylacrylat, Ethylacrylat und Propylacrylat.

Zur Herstellung der auf die Pfropfgrundlage A21 gepfropften Pfropfhülle A22 eignen sich als vinylaromatische Monomere A221 bevorzugt Styrol und/oder Styrolderivate, z.B. Styrol, Alkylstyrole, bevorzugt α-Methylstyrol, und kernalkylierte Styrole, wie z.B. p-Methylstyrol und/oder tert-Butylstyrol.

Beispiele für polare, copolymerisierbare ungesättigte Monomere A222 sind neben Acrylnitril auch Methacrylnitril.

Als mögliche weitere, copolymerisierbare Monomere A223 können beispielsweise folgende Verbindungen Verwendung finden: Acrylsäure, Methacrylsäure, Maleinsäureanhydrid, Methacrylnitril, Methylacrylat, Ethylacrylat, Propylacrylat, Methylmethacrylat, Ethylmethacrylat, Phenylmaleinimid, Acrylamid, Vinylmethylether.

In einer bevorzugten Ausführungsform weist das Pfropfcopolymer A2 einen mittleren Partikeldurchmesser (Teilchengröße) d₅₀ im Bereich von 80 bis 800 nm, bevorzugt 90 bis 700 nm auf. Der Partikeldurchmesser kann beispielsweise durch bekannte geeignete Maßnahmen bei der Herstellung eingestellt werden. Dies wird unter anderem in DE-A 2826925 beschrieben.

Typischerweise kann der mittlere Teilchendurchmesser d₅₀ durch Ultrazentrifugenmessung (W. Scholtan, H. Lange, Kolloid-Z. u. Z. Polymere 250, S. 782 bis 796, 1972) oder aber mit Hilfe der Hydrodynamische Chromatografie HDC (s. W. Wohlleben, H. Schuch, "Measurement of Particle Size Distribution of Polymer Latexes", 2010, Editors: L. Gugliotta, J. Vega, S. 130 - 153) bestimmt werden.

In einer bevorzugten Ausführungsform umfasst die thermoplastische ASA-Zusammensetzung mindestens zwei verschiedene Pfropfcopolymere A2a und A2b, wobei sich die Pfropfcopolymere A2a und A2b durch ihren mittleren Teilchendurchmesser d₅₀ unterscheiden. Insbesondere enthält das Pfropfcopolymer A2 mindestens eines der Pfropfcopolymere A2a und A2b, wobei

Pfropfcopolymer A2a einen mittleren Partikeldurchmesser d₅₀ im Bereich von 80 bis 200 nm (kleinteiliger ASA-Kautschuk) und
Pfropfcopolymer A2b einen mittleren Partikeldurchmesser d₅₀ im Bereich von 300 bis 800 nm (großteiliger ASA-Kautschuk) aufweist.

Es ist erstrebenswert, wenn das Pfropfcopolymer A2b (großteiliger ASA-Kautschuk) eine enge Teilchengrößenverteilung aufweist, wobei es günstig ist, wenn der Quotient Q = (d₉₀-d₁₀) / d₅₀ kleiner als 0,3, vorzugsweise kleiner als 0,2 ist.

Als Pfropfgrundlage geeignete vernetzte C₁-C₈-Alkyl(meth)acrylat-Polymere können nach den bekannten Verfahren zur Herstellung großteiliger Dispersionen erhalten werden, z.B. nach der Saatlatex-Methode, siehe DE 1 911 882. Nach dieser Methode wird typischerweise ein kleinteiliger vernetzter Acrylat-Latex (Saatlatex) mit einem mittleren Teilchendurchmesser d₅₀ im Bereich von 50 bis 180 nm, welcher durch Emulsionspolymerisation von C₁-C₈-Alkyl(meth)acrylaten, vernetzenden Monomeren sowie gegebenenfalls weiteren Co-Monomeren erhalten worden ist, durch Zugabe von weiteren Monomeren, Emulgator und gegebenenfalls Puffersubstanz einer weiteren Polymerisation unterworfen.

Dabei werden die Bedingungen (vgl. Journal of Applied Polymer Science, Vol. 9 (1965), Seiten 2929 bis 2938) typischerweise so eingestellt, dass lediglich die vorhandenen Latexteilchen des Saatlatex weiter wachsen, aber keine neuen Latexteilchen gebildet werden. In der Regel wird ein Initiator eingesetzt. Die Teilchengröße des resultierenden Pfropfcopolymers A2b (großteiligen Kautschuk) lässt sich insbesondere durch Variation des Mengenverhältnisses von Saatlatex zu Monomeren in der gewünschten Weise einstellen.

Das Pfropfcopolymer A2 wird bevorzugt durch Emulsionspolymerisation von Styrol und/oder α-Methylstyrol, und Acrylnitril in Gegenwart der zuvor hergestellten Pfropfgrundlage erhalten. Die Pfropfcopolymere A2 können bei der Herstellung der erfindungsgemäßen Zusammensetzungen in Kombination eingesetzt werden, das Gewichtsverhältnis der Pfropfcopolymere kann in weiten Grenzen variiert werden. Bevorzugt stellt A2 eine Mischung von mindestens zwei ASA-Komponenten dar, wobei das Gewichtsverhältnis Pfropfcopolymer A2a : Pfropfcopolymer A2b im Bereich von 90 : 10 bis 10 : 90, vorzugsweise 80 : 20 bis 20 : 80 und besonders bevorzugt 20 : 10 bis 10:10 liegt.

Bevorzugt werden die Pfropfcopolymere A2a und A2b getrennt hergestellt und aufgearbeitet (z.B. Fällen der Pfropfcopolymere, Entwässern der wasserfeuchten Pfropfcopolymere, Filtration oder Zentrifugation, Trocknen) und dann mit dem thermoplastischen Copolymer A1 und den weiteren Komponenten B, CB und C vermischt.

Es ist zudem möglich, Pfropfcopolymere A2 mit unterschiedlichen Partikelgrößen, insbesondere einer bimodalen Partikelgrößenverteilung von 80 bis 200 nm und von 300 bis 800 nm, durch ein bekanntes Agglomerationsverfahren zu erhalten. Pfropfcopolymere mit großteiligen und kleinteiligen Partikeln sind beispielsweise in DE-A 36 15 607, beschrieben. Weiterhin können Pfropfcopolymere A2 verwendet werden, welche zwei oder mehrere verschiedene Pfropfhüllen umfassen. Pfropfcopolymere mit mehrstufigen Pfropfhüllen sind beispielsweise in EP-A 111260 und WO 2015/078751 beschrieben. Zur Herstellung der ASA-Pfropfpolymer-Komponenten wird auch auf den experimentellen Teil von EP-B 2882806 und EP-B 3039072 verwiesen.

### Komponenten B1, B2 und CB

Die erfindungsgemäßen thermoplastischen ASA-Zusammensetzungen enthalten zusätzlich zum Copolymer A1 und Pfropfpolymer A2 mindestens einen HALS-Stabilisator B1, ggf. einen weiteren HALS-Stabilisator B2, und mindestens eine Carbon Black-Komponente (CB). Oftmals enthalten sie auch eine UV-A Absorber-Komponente B3.

Insbesondere werden als B3 Benzotriazol-Derivate mit einer Molmasse von 200-450 g/mol, insbesondere 200-300 g/mol verwendet. Insbesondere geeignet ist Tinuvin^{®} P, insbesondere in einer Menge von 0,1-2 Gew.-%, oftmals 0,2-1,0 Gew.-;
Tinuvin^{®} P ist 2-(2H-Benzotriazol-2-yl)-4-methyl-Phenol (Mw 225 g/mol). 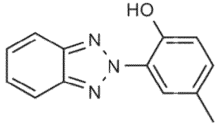
Auch im Prinzip geeignet als Komponente B3 sind folgende Benzotriazol-Derivate:
   Tinuvin^{®}320, Tinuvin^{®}326, Tinuvin^{®}327, Tinuvin^{®}328, Tinuvin^{®}329 und Tinuvin^{®}350, jeweils in den o.g. Mengenbereichen.

Als weitere Lichtschutz-Komponente können der Zusammensetzung im Prinzip alle üblichen UV-A Stabilisatoren zugesetzt werden, beispielsweise Verbindungen auf Basis von Benzophenon, Zimtsäure, organische Phosphite und/oder Phosphonite.

Als HALS-Stabilisator Komponente B1 und/oder B2 können im Prinzip verschiedene Amin-Stabilisatoren eingesetzt werden. Besonders geeignet hat sich jedoch die Mischung aus 2,2,6,6-Tetramethyl-4-piperidinyl-Octadecanat und 2,2,6,6-Tetramethyl-4-piperidinyl-Eicosanat erwiesen. Ein Produkt wird vertrieben als Cyasorb^{®} UV-3853 (Solvay, Mw ca. 520 g/mol, Smp: 30°C).

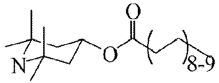

Auch die einzelnen Komponenten dieser Mischung sind per se geeignet.

Als Komponente B2 kann als zusätzliche HALS-Komponente das oligomere Chimassorb^{®} 944 verwendet werden; es ist Poly[[6-[(1,1,3,3-tetramethylbutyl)amino]-1,3,5-triazin-2,4-diyl][(2,2,6,6-tetramethyl-4-piperidinyl)imino]-1,6-hexandiyl[(2,2,6,6-tetramethyl-4-piperidinyl)imino]] und hat ein Mw 2000-3100 g/mol.

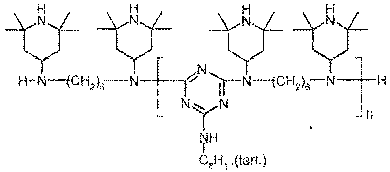

Die weitere Komponente Carbon Black (CB) ist zu 0,1 bis 3 Gew.-%, oftmals 0,2 bis kleiner 1,5 Gew.-%, z.B. 0,3 bis 1,0 Gew.-%, in der thermoplastischen Zusammensetzung enthalten. Dabei bezieht sich die Mengenangabe auf das Carbon Black selbst.

Geeignet ist z.B. Black Pearls^{®} 770 oder auch Black Pearls^{®} 880 von Cabot. Die Komponente CB kann auch in Form eines Masterbatches, z. B. in Komponente A1 (z.B. SAN) zugegeben werden. Das Masterbatch enthält z.B. nur 25 Gew.-% des Carbon Black und 75 Gew.-% SAN-Matrix.

### Komponente C

Als weitere Additive (C) können die üblichen Hilfs- und/oder Zusatzstoffe (von Komponenten (B) verschieden) Verwendung finden, beispielsweise Farbpigmente, Emulgatoren, wie Alkalisalze von Alkyl- oder Alkylarylsulfonsäuren, Alkylsulfate, Fettalkoholsulfonate, Salze höherer Fettsäuren mit 10-30 Kohlenstoffatomen oder Harzseifen, Polymerisationsinitiatoren wie z.B. übliche Persulfate, beispielsweise Kaliumpersulfat, oder bekannte Redox-Systeme, Polymerisationshilfsstoffe wie z.B. übliche Puffersubstanzen, durch welche pH-Werte von vorzugsweise 6 bis 9 eingestellt werden, z.B. Natriumbicarbonat und/oder Natriumpyrophosphat, und/oder Molekulargewichtsregler, beispielsweise Mercaptane, Terpinole und/oder dimeres α-Methylstyrol.

Die Molekulargewichtsregler werden in einer Menge von 0 bis 3 Gew.-%, bezogen auf das Gewicht der Reaktionsmischung, eingesetzt.

Oftmals enthalten die Zusammensetzungen als weitere Additive (C) z.B. Farbstoffe und/oder Pigmente, Weichmacher, Antistatika, Gleitmittel, Treibmittel, Haftvermittler, Füllstoffe, oberflächenaktive Substanzen, Flammschutzmittel, Stabilisatoren u.a. gegen Oxidation, Hydrolyse, Hitze oder Verfärbung, und/oder Verstärkungsmittel.

Diese Additive können sowohl bereits bei der Herstellung der Zusammensetzungen (Formmassen) eingesetzt werden, als auch den Komponenten A1 und/oder A2 bei der Herstellung der Mischung zugesetzt werden.

Als Gleitmittel kommen beispielsweise Kohlenwasserstoffe wie Öle, Paraffine, PE-Wachse, PP-Wachse, Fettalkohole mit 6 bis 20 Kohlenstoffatomen, Ketone, Carbonsäuren wie Fettsäuren, Montansäure oder oxidiertes PE-Wachs, Carbonsäureamide sowie Carbonsäureester, z.B. mit den Alkoholen, Ethanol, Fettalkoholen, Glycerin, Ethandiol, Pentaerythrit und langkettigen Carbonsäuren, als Säurekomponente in Betracht.

Als Additive (C) können übliche Antioxidantien, beispielsweise phenolische Antioxidantien, z.B. alkylierte Monophenole, sowie Ester und/oder Amide der 3-(3,5-di-tertiärbutyl-4-hydroxyphenyl)-propionsäure, eingesetzt werden. Beispielhaft sind Antioxidantien aus EP-A 698637 und EP-A 669367 und aus Plastics Additives Handbook (Zweifel, Maier, Schiller, 6th Edition, Carl Hanser Verlag, München 2009, Seite 1 bis 137). Konkret kann man z.B. als phenolische Antioxidantien z.B. 2,6-Ditertiärbutyl-4-methylphenol, Pentaerythritol-tetrakis-[3-(3,5-ditertiärbutyl-4-hydroxyphenyl)-propionat und N,N'-Di-[3-(3,5-ditertiärbutyl-4-hydroxyphenyl)-propionyl]-hexamethylendiamin einsetzen. Die genannten Stabilisatoren können einzeln oder in Kombinationen verwendet werden. Auch können (von den Komponenten B1, B2, B3 verschiedene) Stabilisatoren eingesetzt werden.

### Weitere Polymere

Es ist auch möglich, den oben beschriebenen ASA-Zusammensetzungen weitere (verträgliche) thermoplastische Kunststoff-Komponenten zuzusetzen, beispielsweise Polyester (z.B. Polyethylenterephthalat, Polybutylenterephthalat), Polycarbonat (PC), Polyamid, Polyoxymethylen, Polystyrol, Polyethylen, Polypropylen und/oder Polyvinylchlorid. In der Regel ist deren Menge kleiner als die Menge an Copolymeren A1+A2. Typische Beispiele sind Blends aus ASA, wie beschrieben, und PC.

### Verarbeitung der Zusammensetzungen

Die erfindungsgemäßen Zusammensetzungen können beispielsweise pelletiert oder granuliert, oder nach allgemein bekannten Verfahren, beispielsweise durch Extrusion, Spritzguss oder Kalandrieren, zu Automobil-Formteilen, Kabelummantelungen, Folien, Schläuchen, Fasern, Profilen, Schuhschalen, Schuhsohlen, technischen Formteilen, Gebrauchsartikeln, Formkörpern aller Art, Beschichtungen, Faltenbalgen, Tierohrmarken und/oder Blasformkörpern verarbeitet werden.

Bei dem vorliegend eingesetzten Spritzgießen zur Erzeugung der Formteile wird die thermoplastische ASA-Zusammensetzung in einer üblichen Spritzgießmaschine bei hoher Temperatur verflüssigt und in eine Form (z.B. Zylinder) unter Druck eingespritzt. Im Werkzeug geht die Polymerformmasse durch Abkühlung in den festen Zustand über und wird als fertiges Formteil entnommen und weiter getestet. In der Einspritzphase wird die Spritzeinheit an die Schließeinheit gefahren, mit der Düse angedrückt und die Schnecke rückseitig unter hohen Druck gesetzt. Dabei wird die Polymerschmelze durch die geöffnete Düse des Spritzgießwerkzeugs in den formgebenden Hohlraum gedrückt.

Die Erfindung wird durch die nachfolgenden Beispiele und Ansprüche näher erläutert:

### Beispiel 1 Herstellung der Zusammensetzung

### Komponente A1

Als Copolymer wurde ein SAN von INEOS Styrolution hergestellt mit 67 Gew.-% Styrol als A11 und 33 Gew.-% Acrylnitril als A12, mit VZ Viskositätszahl (gemessen in 0,5 %i-ger Toluol-Lösung bei RT): 80 ml/g. Die Komponente A1 wurden hergestellt nach einem Lösungspolymerisationsverfahren, s. Kunststoff-Handbuch, Vieweg-Daumiller, Band V (Polystyrol), Carl-Hanser, München, 1969, Seite 124.

### ASA-Komponenten A2

Als erstes Pfropfcopolymer A2a wurde ein ASA mit kleinen Acrylat-Kautschuk-Partikeln von INEOS Styrolution hergestellt (gemäß DE 3135251, Seite 12, Zeile 21) und eingesetzt (Pfropfkauschuk LS2). Das Pfropfcopolymer A2a hat einen mittleren Partikeldurchmesser d₅₀ im Bereich kleiner 200 nm.

Als zweites Pfropfcopolymer A2b wurde ein ASA mit größeren Acrylat-Kautschuk-Partikein von INEOS Styrolution hergestellt (gemäß EP-B 3039072, Seite 9) und eingesetzt (Pfropfkauschuk LS5). Pfropfcopolymer A2b hat einen mittleren Partikeldurchmesser d₅₀ im Bereich von etwa 500 nm.

Jede der A2a und A2b Pfropfcopolymer-Komponenten wurde in getrennten Versuchen mit der SAN-Komponente A1 in einem Gewichtsverhältnis von 40:60 in einem Extruder (ZSK 30 Doppelschneckenextruder der Fa. Werner & Pfleiderer) bei einer Temperatur von 230 °C innig vermischt.

### Weitere Komponenten

Komponente B1: HALS-Stabilisator Cyasorb 3853, Menge 0,5 Gew.-%
Komponente B2: HALS-Stabilisator Chimassorb 944, Menge 0,5 Gew.-%
Komponente B3: UV-Absorber: Tinuvin P, Menge 0,5 Gew.-%
Komponente C: Pigment-Ruß Black Pearls 770, Menge 0,5 Gew.-%.

Für Vergleichszwecke wurde als weitere Additivkomponente (C) das handelsübliche Tinuvin ^{®} 765, eine Mischung aus Bis(1,2,2,6,6-pentamethyl-4-piperidyl)sebacat und Methyl-1,2,2,6,6-pentamethyl-4-piperidylsebacat (508 g/mol und 370 g/mol), untersucht.

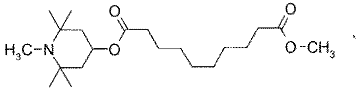

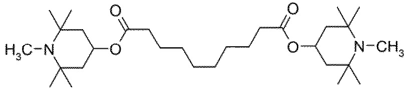

Für Vergleichstests wurde als weitere Additivkomponente (C) das handelsübliche Tinuvin^{®} 770, nämlich Bis(2,2,6,6,-tetramethyl-4-piperidyl)sebaceat (Mw 481 g/mol) getestet.

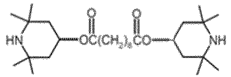

### Beispiel 2 Charakterisierung der Zusammensetzungen

Die Zusammensetzungen (mit Komponenten in Gew.-Teilen) und die gemessenen physikalischen Eigenschaften werden in Tabelle 1 zusammengefasst. Beispiel 1 ist erfindungsgemäß und hat vorteilhafte Eigenschaften.

**Tabelle 1**

| | Vergleich 1 | Vergleich 2 | Vergleich 3 | Bsp.1 |
|---|---|---|---|---|
| Komponente A1 (Copolymer) | 32 | 32 | 32 | 32 |
| Komponente A2a (Pfropfcopolymer LS2) | 21 | 21 | 21 | 21 |
| Komponente A2b (Pfropfcopolymer LS5) | 11 | 11 | 11 | 11 |
| Komponente A22 (Pfropfhülle) | 36 | 36 | 36 | 36 |
| Komponente B3 Tinuvin P (Absorber) | 0,5 | 0 | 0,5 | 0,5 |
| Tinuvin 770 (HALS) | 0,5 | 0,5 | | |
| Komponente B1 Cyasorb 3853 (HALS) | | | | 0,5 |
| Chimassorb 944 (HALS) B2 | | | 0.5 | |
| Komponente CB als Ruß Black Pearls 880 | 0,5 (2,0) | 0,5 (2,0) | 0,5 (2,0) | 0,5 (2,0) |
| Nachweisbarkeit von mindestens einem HALS nach 0°h Bewitterung ISO 4892-2 | Ja | Ja | Nein | Ja |
| Nachweisbarkeit von mindestens einem HALS nach 500 h Bewitterung ISO 4892-2 | Nein* | Nein* | Nein | Ja |
| Oberflächenglanz nach 4000 h | < 20 | < 20 | < 40 | 65 |
| Farbabweichung Delta E | 3 Einheiten | 3 Einheiten | 3 Einheiten | 2 Einheiten |

| | | | | |
|---|---|---|---|---|
| * "Nein" bedeutet: abgewaschen durch Beregnungszyklus ISO 4892-2. Nachweisbarkeit entweder nicht möglich oder deutlich unter der mit "Ja" nachgewiesenen Menge. | | | | |

Die Komponente CB wird in den Beispielen als Batch eingesetzt, das 25 Gew.-% Carbon Black und 75 Gew.-% SAN-Copolymer enthält. Die Angabe 0,5 Gewichtsteile entspricht daher de facto 2,0 Gewichtsteilen der Batch-Zusammensetzung.

Die Charpy-Kerbschlagzähigkeit der Formteile nach Spritzguss wird gemessen nach ISO 179 1eA bei 23 °C, sowie 220 °C Spritzgusstemperatur. Sie ist bei Beispiel 1 auch nach Bewitterung noch hoch. Eine hohe Kerbschlagzähigkeit wird bereits bei niedrigen Verarbeitungstemperaturen erreicht, diese bleibt auch nach Bewitterung gut.

Die mittlere Teilchengröße wird mithilfe der Ultrazentrifuge gemäß der Methode von Scholtan, W. & Lange, H. Kolloid-Z.u.Z.Polymere (1972) bestimmt. Die UltrazentrifugenMessung ergibt die integrale Massenverteilung der Teilchen einer Probe. Der mittlere Teilchendurchmesser d₅₀ ist definiert als der Durchmesser, bei dem 50 Gew.-% der Teilchen kleinere und 50 Gew.-% der Teilchen größere Durchmesser haben.

Der Xenotest (künstliche Bewitterung) erfolgt gemäß ISO 4892-2. Dieser Teil von EN ISO 4892 legt die Verfahren fest, bei denen Probekörper in einem Gerät einer Xenonbogenstrahlung, Wärme und Wasser ausgesetzt werden, um die Bewitterungseffekte nachzubilden, die auftreten, wenn Werkstoffe in realen, im Endgebrauch vorhandenen Umgebungen der Globalstrahlung oder Globalstrahlung hinter Fensterglas ausgesetzt sind. Die Probekörper (Rundscheiben, 60 mm-Durchmesser) werden bei geregelten Umgebungsbedingungen (Temperatur, Luftfeuchte und/oder Benässung) gefilterter Xenonlampenstrahlung ausgesetzt. Die Vorbereitung der Probekörper und die Auswertung der Ergebnisse werden in anderen, für bestimmte Werkstoffe vorgesehenen internationalen Normen, behandelt. Eine allgemeine Anleitung ist in ISO 4892-1 gegeben.

Die Messung des Oberflächenglanzes erfolgt an spritzgegossenen Bauteilen unter einem Winkel von 60° mit einem üblichen Messgerät gemäß DIN EN ISO 2813 (2015).

Die Messung der Farbabweichung DE erfolgt an spritzgegossenen Bauteilen mit einem üblichen Messgerät für die Messung von Farben bei KFZ-Teilen (DIN 6174).

Tabellen 1 und 2 zeigen einen synergetisch verbesserten Effekt für die erfindungsgemäße ASA-Zusammensetzung. Nach der durchgeführten Bewitterung der Formteile ist für die erfindungsgemäße Zusammensetzung (Bsp.1) im Gegensatz zu den drei Vergleichszusammensetzungen die HALS-Komponente (B1) nachweislich an der Oberfläche vermehrt vorhanden.

**Tabelle 2 (Analytischer Nachweis von HALS an der Oberfläche der ASA-Formteil Probekörper nach Bewitterung (gemessen an Rundscheiben, relative Signalintensität)**

| | rel. Signalintensität | | | |
|---|---|---|---|---|
| | 0 h | 500 h | 1000 h | 1600 h |
| Tinuvin^{®} 770 (HALS) | 1,0 | - | - | - |
| Cyasorb^{®} 3853 C16-Chain (HALS) | 1,0 | 5,5 | 12,1 | 16,2 |
| Cyasorb^{®} 3853 C18-Chain (HALS) | 1,0 | 2,0 | 4,3 | 5,8 |
| Chimassorb^{®} 944 (HALS) (no detection) | - | - | - | - |

Die relativen Signalintensitäten korrespondieren zu den jeweils vorhandenen Mengen an Stabilisator an der entsprechenden Oberfläche der ASA-Rundscheibe.

Chimassorb^{®} 944 wurde weder vor noch nach Bewitterung an der Oberfläche der Probekörper nachgewiesen. Das Additiv Tinuvin^{®} 770 wurde zwar vor der Bewitterung an der Oberfläche der Probekörper (Rundscheiben) noch nachgewiesen, jedoch bereits nach 500 Stunden nicht mehr. Es wird angenommen, dass es schnell an die Oberfläche migriert, bei der künstlichen Bewitterung dann aber ausgewaschen wird.

Beide Komponenten von Cyasorb^{®} 3853 hingegen wurden mit zunehmender Bewitterung in größeren Mengen an der Oberfläche der Formteile nachgewiesen, was die verbesserte Stabilisierung dieser ASA-Zusammensetzungen bestätigt.

Die Messungen basieren auf Sekundärionen-Massenspektrometrie (SIMS), einer für den Polymerfachmann üblichen Methode der Oberflächenchemie zur Bestimmung einzelner Substanzen an der Oberfläche von Formteilen. Auch wird bei den erfindungsgemäßen Formteilen ein deutlich höherer Oberflächenglanz nachgewiesen und die Farbabweichung Delta-E ist nach Bewitterung deutlich kleiner.

## Patentansprüche

1. Thermoplastische Acrylat-Styrol-Acrylnitril (ASA) Copolymer-Zusammensetzung für die Herstellung von Formteilen, enthaltend folgende Komponenten:
| | | | |
|---|---|---|---|
| A1: | 10 - 89,7 Gew.-% eines Copolymers A1, bestehend aus: | | |
| | A11: | 60-70 Gew.-% mindestens eines ggf. substituierten Styrols, | |
| | A12: | 25-35 Gew.-% Acrylnitril, | |
| | A13: | 0-20 Gew.-% eines weiteren, copolymerisierbaren Monomers; | |
| A2: | 10 - 89,7 Gew.-% mindestens eines Pfropfcopolymers A2 mit einer mittleren Teilchengröße, ermittelt durch Ultrazentrifugenmessung, von 80 bis 800 nm, bestehend aus: | | |
| A21: | | 40-90 Gew.-% mindestens einer kautschukartigen Grundstufe mit T_{g} < 0°C bestehend aus: | |
| | | A211: | 70-99,9 Gew.-% mindestens eines Alkylacrylats, |
| | | A212: | 0,1-10 Gew.-% mindestens eines, mindestens zwei funktionelle Gruppen enthaltenden vernetzenden Monomers, |
| | | A213: | 0-29,9 Gew.-% mindestens eines weiteren copolymerisierbaren Monomers; |
| | A22: | 10-60 Gew.-% mindestens einer Pfropfhülle, bestehend aus: | |
| | | A221: | 60-80 Gew.-% mindestens eines ggf. substituierten Styrols, |
| | | A222: | 20-40 Gew.-% Acrylnitril, |
| | | A223: | 0-20 Gew.-% mindestens eines weiteren, copolymerisierbaren Monomers; |
| B1: | 0,1 - 2 Gew.-% mindestens eines sterisch gehinderten Amins (HALS) B1, wobei das sterisch gehinderte Amin (HALS) B1 aus der Gruppe der sterisch gehinderten Mono-Piperidin-Derivate mit einer Molmasse von 400-600 g/mol ausgewählt ist; | | |
| B2: | 0 - 2 Gew.-% mindestens eines sterisch gehinderten Amins (HALS) B2, verschieden von B1; | | |
| B3: | 0,1-2 Gew.-% mindestens eines UV-A Absorbers B3; | | |
| CB: | 0,1 - 3 Gew.-% mindestens einer Carbon-Black-Komponente CB, sowie | | |
| C: | 0 - 5 Gew.-%, insbesondere 0,1-5 Gew.-% eines weiteren/ weiterer Additiv(e) C, verschieden von B1, B2, B3 und CB, | | |
wobei die thermoplastische Acrylat-Styrol-Acrylnitril Copolymer-Zusammensetzung nach der Herstellung von Formteilen, insbesondere durch Spritzgießen, dazu führt, dass in einem Formteil nach 500 h künstlicher Bewitterung gemäß Norm EN ISO 4892 mindestens eines der sterisch gehinderten Amine (B1, B2) an der Oberfläche des Formteils, nachgewiesen mittels Sekundärionen-Massenspektrometrie (SIMS), in einer höheren Menge vorliegt, als in einem Formteil vor der künstlichen Bewitterung.

2. Thermoplastische Acrylat-Styrol-Acrylnitril Copolymer-Zusammensetzung für die Herstellung von Formteilen gemäß Anspruch 1, **dadurch gekennzeichnet, dass** die Menge (ppm) an sterisch gehindertem Amin (B1, B2) an der Oberfläche des Formteils nach 1000 h, bevorzugt nach 1600 h, mindestens doppelt so hoch, insbesondere mindestens dreifach höher ist als bei einem Formteil vor Bewitterung.

3. Thermoplastische Acrylat-Styrol-Acrylnitril Copolymer-Zusammensetzung für die Herstellung von Formteilen gemäß Anspruch 1 oder 2, **dadurch gekennzeichnet, dass** die Zusammensetzung 0,1-2 Gew.-% mindestens zwei sterisch gehinderter Amine (B1 und B2) enthält, wobei B1 ausgewählt ist aus der Gruppe der sterisch gehinderten Mono-Piperidin-Derivate mit einer Molmasse von 400-600 g/mol, und wobei B2 ausgewählt ist aus der Gruppe der sterisch gehinderten Piperidin-Derivate mit einer Molmasse von >600 g/mol, vorzugsweise Poly-{6-[(1,1,3,3-tetramethylbutyl)amino-1,3,5-triazine-2,4-diyl][(2,2,6,6-tetramethyl-4-piperidyl)imino]-1,6-hexanediyl[(2,2,6,6-tetramethyl-4-piperidyl)imino)}.

4. Thermoplastische Acrylat-Styrol-Acrylnitril Copolymer-Zusammensetzung für die Herstellung von Formteilen gemäß mindestens einem der Ansprüche 1 bis 3, **dadurch gekennzeichnet, dass** die Zusammensetzung 0,1-1 Gew.-% mindestens eines UV-A Absorbers B3 enthält, ausgewählt aus der Gruppe der Benzotriazol-Derivate mit einer Molmasse von 200-400 g/mol.

5. Thermoplastische Acrylat-Styrol-Acrylnitril Copolymer-Zusammensetzung für die Herstellung von Formteilen gemäß mindestens einem der Ansprüche 1 bis 4, **dadurch gekennzeichnet, dass** die Zusammensetzung 0,1-2 Gew.-% mindestens eines primären Antioxidans aus der Klasse der sterisch gehinderten Phenole enthält.

6. Thermoplastische Acrylat-Styrol-Acrylnitril Copolymer-Zusammensetzung für die Herstellung von Formteilen gemäß mindestens einem der Ansprüche 1 bis 5, **dadurch gekennzeichnet, dass** die Zusammensetzung als zusätzliche Komponente (C) 0,1-2 Gew.-% mindestens eines sekundären Antioxidans aus der Klasse der Phosphit-Stabilisatoren, und/oder mindestens eines Schwefel-Stabilisators enthält.

7. Thermoplastische Acrylat-Styrol-Acrylnitril Copolymer-Zusammensetzung für die Herstellung von Formteilen gemäß mindestens einem der Ansprüche 1 bis 6, **dadurch gekennzeichnet, dass** die Zusammensetzung 0,2-1,5 Gew.-% einer Carbon-Black-Komponente CB enthält.

8. Thermoplastische Acrylat-Styrol-Acrylnitril Copolymer-Zusammensetzung für die Herstellung von Formteilen gemäß mindestens einem der Ansprüche 1 bis 7, **dadurch gekennzeichnet, dass** die Zusammensetzung 30-70 Gew.-% des Copolymers A1 und 20-70 Gew.-% an mindestens einem, insbesondere zwei unterschiedlichen, Pfropfcopolymer(en) A2 enthält.

9. Thermoplastische Acrylat-Styrol-Acrylnitril Copolymer-Zusammensetzung für die Herstellung von Formteilen gemäß mindestens einem der Ansprüche 1 bis 8, **dadurch gekennzeichnet, dass** in den Copolymer-Komponenten A1 und A2 die Monomere A11 und A221 gewählt sind aus der Gruppe Styrol, α-Methylstyrol und kernalkyliertes Styrol.

10. Thermoplastische Acrylat-Styrol-Acrylnitril Copolymer-Zusammensetzung für die Herstellung von Formteilen gemäß mindestens einem der Ansprüche 1 bis 9, **dadurch gekennzeichnet, dass** in der Pfropfcopolymer-Komponente A2 die Monomere A211 ausgewählt sind aus der Gruppe der Acrylsäurealkylester mit 1-8, insbesondere 1-4 Kohlenstoffatomen im Alkylrest.

11. Thermoplastische Acrylat-Styrol-Acrylnitril Copolymer-Zusammensetzung für die Herstellung von Formteilen gemäß mindestens einem der Ansprüche 1 bis 10, **dadurch gekennzeichnet, dass** in den Copolymer-Komponenten A1 und A2 die Monomere A12 und A222 Acrylnitril sind und A11 und A221 Styrol sind.

12. Verfahren zur Herstellung einer thermoplastischen Acrylat-Styrol-Acrylnitril Copolymer-Zusammensetzung für die Herstellung von Formteilen gemäß mindestens einem der Ansprüche 1 bis 11, **dadurch gekennzeichnet, dass** die Copolymer-Komponenten A1 und A2 durch Emulsionspolymerisation bzw. eine Pfropfmischpolymerisation hergestellt werden und anschließend mit den weiteren Komponenten B1, B2, CB und C vermengt werden.

13. Formteil hergestellt aus einer thermoplastischen Acrylat-Styrol-Acrylnitril Copolymer-Zusammensetzung gemäß mindestens einem der Ansprüche 1 bis 11.

14. Verwendung einer thermoplastischen Acrylat-Styrol-Acrylnitril Copolymer Zusammensetzung gemäß mindestens einem der Ansprüche 1 bis 11 für die Herstellung von Formteilen, insbesondere für Automobil-Teile wie Außenspiegel, Karosserieverkleidungen, Kühlergitter, Front- und/oder Back-end Teile, Teile von Leuchten und Leuchten-Gehäusen, Kabelummantelungen, Folien, Schläuchen, Fasern, Profilen, technischen Formteilen, Beschichtungen und/oder Blasformkörpern.

## Claims

1. Thermoplastic acrylate-styrene-acrylonitrile (ASA) copolymer composition for the production of moldings, containing the following components:
| | | | |
|---|---|---|---|
| A1: | 10-89.7% by weight of a copolymer A1 consisting of: | | |
| | A11: | 60-70% by weight of at least one styrene that may be substituted, | |
| | A12: | 25-35% by weight acrylonitrile, | |
| | A13: | 0-20% by weight of another copolymerizable monomer; | |
| A2: | 10-89.7% by weight of at least one graft copolymer A2 with an average particle size, determined by ultracentrifuge measurement, of 80 to 800 nm, consisting of: | | |
| | A21: | 40-90% by weight of at least one rubbery base stage with T_{g} < 0°C consisting of: | |
| | | A211: | 70-99.9% by weight of at least one alkyl acrylate, |
| | | A212: | 0.1-10% by weight of at least one crosslinking monomer containing at least two functional groups, |
| | | A213: | 0-29.9% by weight of at least one other copolymerizable monomer; |
| | A22: | 10-60% by weight of at least one graft shell consisting of: | |
| | | A221: | 60-80% by weight of at least one styrene that may be substituted, |
| | | A222: | 20-40% by weight acrylonitrile, |
| | | A223: | 0-20 % by weight of at least one other copolymerizable monomer; |
| B1: | 0.1-2% by weight of at least one sterically hindered amine (HALS) B1, wherein the sterically hindered amine (HALS) B1 is selected from the group of sterically hindered mono-piperidine derivatives having a molecular weight of 400-600 g/mol; | | |
| B2: | 0-2 % by weight of at least one sterically hindered amine (HALS) B2, different from B1; | | |
| B3: | 0.1-2% by weight of at least one UV-A absorber B3; | | |
| CB: | 0.1-3 % by weight of at least one carbon black component CB, and | | |
| C: | 0-5 % by weight, in particular 0.1-5 % by weight of (a) further additive(s) C, other than B1, B2, B3 and CB, | | |
wherein the thermoplastic acrylate-styrene-acrylonitrile copolymer composition after the production of moldings, in particular by injection molding, results in at least one of the sterically hindered amines (B1, B2) being present in a higher amount on the surface of the molding after 500 h of artificial weathering according to standard EN ISO 4892, as detected by secondary ion mass spectrometry (SIMS), than in a molding before the artificial weathering.

2. Thermoplastic acrylate-styrene-acrylonitrile copolymer composition for the production of moldings according to claim 1, **characterized in that** the amount (ppm) of sterically hindered amine (B1, B2) on the surface of the molding after 1000 h, preferably after 1600 h, is at least twice as high, in particular at least three times higher, than in a molding before weathering.

3. Thermoplastic acrylate-styrene-acrylonitrile copolymer composition for the production of moldings according to claim 1 or 2, **characterized in that** the composition contains 0.1-2% by weight of at least two sterically hindered amines (B1 and B2), wherein B1 is selected from the group of sterically hindered mono-piperidine derivatives having a molecular weight of 400-600 g/mol, and wherein B2 is selected from the group of sterically hindered piperidine derivatives with a molar mass of >600 g/mol, preferably poly-{6-[(1,1,3,3-tetramethylbutyl)amino-1,3,5-triazine-2,4-diyl][(2,2,6,6-tetramethyl-4-piperidyl)imino]-1,6-hexanediyl[(2,2,6,6-tetramethyl-4-piperidyl)imino]}.

4. Thermoplastic acrylate-styrene-acrylonitrile copolymer composition for the production of moldings according to at least one of claims 1 to 3, **characterized in that** the composition contains 0.1-1% by weight of at least one UV-A absorber B3 selected from the group of benzotriazole derivatives having a molecular weight of 200-400 g/mol.

5. Thermoplastic acrylate-styrene-acrylonitrile copolymer composition for the manufacture of moldings according to at least one of claims 1 to 4, **characterized in that** the composition contains 0.1-2% by weight of at least one primary antioxidant from the class of sterically hindered phenols.

6. Thermoplastic acrylate-styrene-acrylonitrile copolymer composition for the production of moldings according to at least one of claims 1 to 5, **characterized in that** the composition contains as additional component (C) 0.1-2% by weight of at least one secondary antioxidant from the class of phosphite stabilizers, and/or at least one sulphur stabilizer.

7. Thermoplastic acrylate-styrene-acrylonitrile copolymer composition for the production of moldings according to at least one of claims 1 to 6, **characterized in that** the composition contains 0.2-1.5% by weight of a carbon black component CB.

8. Thermoplastic acrylate-styrene-acrylonitrile copolymer composition for the production of moldings according to at least one of claims 1 to 7, **characterized in that** the composition contains 30-70% by weight of the copolymer A1 and 20-70% by weight of at least one, in particular two different, graft copolymer(s) A2.

9. Thermoplastic acrylate-styrene-acrylonitrile copolymer composition for the production of moldings according to at least one of claims 1 to 8, **characterized in that** in the copolymer components A1 and A2 the monomers A11 and A221 are selected from the group consisting of styrene, α-methylstyrene and core-alkylated styrene.

10. Thermoplastic acrylate-styrene-acrylonitrile copolymer composition for the production of moldings according to at least one of claims 1 to 9, **characterized in that** in the graft copolymer component A2 the monomers A211 are selected from the group of alkyl acrylates having 1-8, in particular 1-4 carbon atoms in the alkyl radical.

11. Thermoplastic acrylate-styrene-acrylonitrile copolymer composition for the production of moldings according to at least one of claims 1 to 10, **characterized in that** in the copolymer components A1 and A2 the monomers A12 and A222 are acrylonitrile and A11 and A221 are styrene.

12. Process for the preparation of a thermoplastic acrylate-styrene-acrylonitrile copolymer composition for the production of moldings according to at least one of claims 1 to 11, **characterized in that** the copolymer components A1 and A2 are prepared by emulsion polymerization or a graft copolymerization and are then mixed with the further components B1, B2, CB and C.

13. Molding made from a thermoplastic acrylate-styrene-acrylonitrile copolymer composition according to at least one of claims 1 to 11.

14. Use of a thermoplastic acrylate-styrene-acrylonitrile copolymer composition according to at least one of claims 1 to 11 for the production of moldings, in particular for automotive parts such as exterior mirrors, body panels, radiator grilles, front-end and/or back-end parts, parts of lights and light housings, cable sheaths, films, hoses, fibers, profiles, technical moldings, coatings and/or blow-molded articles.

## Revendications

1. Composition de copolymère thermoplastique acrylate-styrène-acrylonitrile (ASA) pour la fabrication de pièces moulées, contenant les composants suivants :
| | | | |
|---|---|---|---|
| A1 : | 10-89,7 % en poids d'un copolymère A1 constitué de : | | |
| | A11 : | 60-70 % en poids d'au moins un styrène éventuellement substitué, | |
| | A12 : | 25-35 % en poids d'acrylonitrile, | |
| | A13 : | 0-20 % en poids d'un autre monomère copolymérisable ; | |
| A2: | 10-89,7 % en poids d'au moins un copolymère greffé A2 ayant une taille moyenne de particules, déterminée par mesure à l'ultracentrifugeuse, de 80 à 800 nm, constitué de : | | |
| | A21 : | 40-90 % en poids d'au moins une étape de base caoutchouteuse avec T_{g} < 0°C consistant en : | |
| | | A211 : | 70-99,9 % en poids d'au moins un acrylate d'alkyle, |
| | | A212 : | 0,1-10 % en poids d'au moins un monomère de réticulation contenant au moins deux groupes fonctionnels, |
| | | A213 : | 0-29,9 % en poids d'au moins un autre monomère copolymérisable ; |
| | A22 : | 10-60 % en poids d'au moins une enveloppe de greffage, constituée de : | |
| | | A221 : | 60-80 % en poids d'au moins un styrène éventuellement substitué, |
| | | A222 : | 20-40 % en poids d'acrylonitrile, |
| | | A223 : | 0-20 % en poids d'au moins un autre monomère copolymérisable ; |
| B1 : | 0,1-2 % en poids d'au moins une amine stériquement encombrée (HALS) B1, l'amine stériquement encombrée (HALS) B1 étant choisie dans le groupe des dérivés de mono-pipéridine stériquement encombrés ayant une masse molaire de 400-600 g/mol ; | | |
| B2 : | 0-2 % en poids d'au moins une amine à empêchement stérique (HALS) B2, différente de B1 ; | | |
| B3: | 0,1-2 % en poids d'au moins un absorbeur UV-A B3 ; | | |
| CB: | 0,1-3 % en poids d'au moins un composant noir de carbone CB, et | | |
| C: | 0-5 % en poids, en particulier 0,1-5 % en poids d'un autre/d'autres additif(s) C, différent(s) de B1, B2, B3 et CB, | | |
la composition de copolymère thermoplastique acrylate-styrène-acrylonitrile ayant pour effet, après la fabrication de pièces moulées, en particulier par moulage par injection, que dans une pièce moulée après 500 h d'exposition artificielle aux intempéries selon la norme EN ISO 4892, au moins l'une des amines à empêchement stérique (B1, B2) est présente à la surface de la pièce moulée, détectée par spectrométrie de masse à ions secondaires (SIMS), en une quantité plus élevée que dans une pièce moulée avant l'exposition artificielle aux intempéries.

2. Composition de copolymère thermoplastique acrylate-styrène-acrylonitrile pour la fabrication de pièces moulées selon la revendication 1, **caractérisée en ce que** la quantité (ppm) d'amine à empêchement stérique (B1, B2) à la surface de la pièce moulée après 1000 h, de préférence après 1600 h, est au moins deux fois plus élevée, en particulier au moins trois fois plus élevée que pour une pièce moulée avant exposition aux intempéries.

3. Composition de copolymère thermoplastique acrylate-styrène-acrylonitrile pour la fabrication de pièces moulées selon la revendication 1 ou 2, **caractérisée en ce que** la composition contient 0,1-2 % en poids d'au moins deux amines stériquement encombrées (B1 et B2), B1 étant choisi dans le groupe des dérivés de mono-pipéridine stériquement encombrés ayant une masse molaire de 400-600 g/mol, et où B2 est choisi dans le groupe des dérivés de pipéridine stériquement encombrés ayant une masse molaire > 600 g/mol, de préférence le poly-{6-[(1,1,3,3-tétraméthylbutyl)amino-1,3,5-triazine-2,4-diyl][(2,2,6,6-tétraméthyl-4-pipéridyl)imino]-1,6-hexanediyl[(2,2,6,6-tétraméthyl-4-pipéridyl)imino]}.

4. Composition de copolymère thermoplastique acrylate-styrène-acrylonitrile pour la fabrication de pièces moulées selon au moins l'une des revendications 1 à 3, **caractérisée en ce que** la composition contient 0,1-1 % en poids d'au moins un absorbeur UV-A B3 choisi dans le groupe des dérivés du benzotriazole ayant une masse molaire de 200-400 g/mol.

5. Composition de copolymère thermoplastique acrylate-styrène-acrylonitrile pour la fabrication de pièces moulées selon au moins l'une des revendications 1 à 4, **caractérisée en ce que** la composition contient 0,1-2 % en poids d'au moins un antioxydant primaire de la classe des phénols stériquement encombrés.

6. Composition de copolymère thermoplastique acrylate-styrène-acrylonitrile pour la fabrication de pièces moulées selon au moins l'une des revendications 1 à 5, **caractérisée en ce que** la composition contient comme composant supplémentaire (C) 0,1-2 % en poids d'au moins un antioxydant secondaire de la classe des stabilisants phosphites, et/ou au moins un stabilisant soufré.

7. Composition de copolymère thermoplastique acrylate-styrène-acrylonitrile pour la fabrication de pièces moulées selon au moins l'une des revendications 1 à 6, **caractérisée en ce que** la composition contient 0,2 à 1,5 % en poids d'un composant noir de carbone CB.

8. Composition de copolymère thermoplastique acrylate-styrène-acrylonitrile pour la fabrication de pièces moulées selon au moins l'une des revendications 1 à 7, **caractérisée en ce que** la composition contient 30 à 70 % en poids du copolymère A1 et 20 à 70 % en poids d'au moins un copolymère greffé A2, notamment deux copolymères greffés A2 différents.

9. Composition de copolymère thermoplastique acrylate-styrène-acrylonitrile pour la fabrication de pièces moulées selon au moins l'une des revendications 1 à 8, **caractérisée en ce que** dans les composants A1 et A2 du copolymère, les monomères A11 et A221 sont choisis dans le groupe constitué par le styrène, l'α-méthylstyrène et le styrène alkylé sur le noyau.

10. Composition de copolymère thermoplastique acrylate-styrène-acrylonitrile pour la fabrication de pièces moulées selon au moins l'une des revendications 1 à 9, **caractérisée en ce que** dans le composant copolymère greffé A2, les monomères A211 sont choisis dans le groupe des esters alkyliques de l'acide acrylique avec 1-8, en particulier 1-4 atomes de carbone dans le radical alkyle.

11. Composition de copolymère thermoplastique acrylate-styrène-acrylonitrile pour la fabrication de pièces moulées selon au moins l'une des revendications 1 à 10, **caractérisée en ce que** dans les composants A1 et A2 du copolymère, les monomères A12 et A222 sont l'acrylonitrile et A11 et A221 sont le styrène.

12. Procédé de préparation d'une composition de copolymère thermoplastique acrylate-styrène-acrylonitrile pour la fabrication de pièces moulées selon au moins l'une des revendications 1 à 11, **caractérisé en ce que** les composants A1 et A2 du copolymère sont préparés par polymérisation en émulsion ou par polymérisation par greffage, respectivement, et sont ensuite mélangés avec les autres composants B1, B2, CB et C.

13. Pièce moulée fabriquée à partir d'une composition de copolymère thermoplastique acrylate-styrène-acrylonitrile selon au moins l'une des revendications 1 à 11.

14. Utilisation d'une composition de copolymère thermoplastique acrylate-styrène-acrylonitrile selon au moins l'une des revendications 1 à 11 pour la fabrication de pièces moulées, en particulier pour des pièces automobiles telles que des rétroviseurs extérieurs, des panneaux de carrosserie, des grilles de radiateur, des pièces d'extrémité avant et/ou arrière, des pièces de feux et de boîtiers de feux, des gaines de câbles, des films, des tuyaux, des fibres, des profilés, des pièces moulées techniques, des revêtements et/ou des pièces moulées par soufflage.
